# FASCICULE DE BREVET EUROPEEN

(11) **EP 0 846 854 B1**
(45) Date de publication et mention de la délivrance du brevet: **28.04.2004**
(21) Numéro de dépôt: 97402929.0
(22) Date de dépôt: 04.12.1997
(51) Int. Cl.: F02K 1/70, F02K 1/76

(54) **Inverseur de poussée de turboréacteur à portes maintenues dans les lignes de nacelle**
Schubumkehrvorrichtung für Strahltriebwerke mittels Klappen, die mit der Gondelfläche fluchten
Gas turbine thrust-reverser with doors kept flush in the nacelle surface

(30) Priorité: 05.12.1996 FR 9614923
(43) Date de publication de la demande: 10.06.1998
(73) Titulaire: Hurel-Hispano, 76700 Harfleur (FR)
(72) Inventeur: Baudu, Pierre, André, Marcel, 76600-Le Havre (FR); Gonidec, Patrick, 76290-Montivilliers (FR); Rouyer, Pascal, Gérard, 76430 - Saint Aubin Routot (FR); Vauchel, Guy Bernard, 76610 - Le Havre (FR)
(74) Mandataire: Berrou, Paul

(56) Documents cités:
- EP-A- 0 357 494
- EP-A- 0 646 718
- FR-A- 1 482 538
- US-A- 5 243 817

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autres cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

Nous appellerons capotage extérieur l'ensemble constitué par la paroi extérieure de la nacelle.

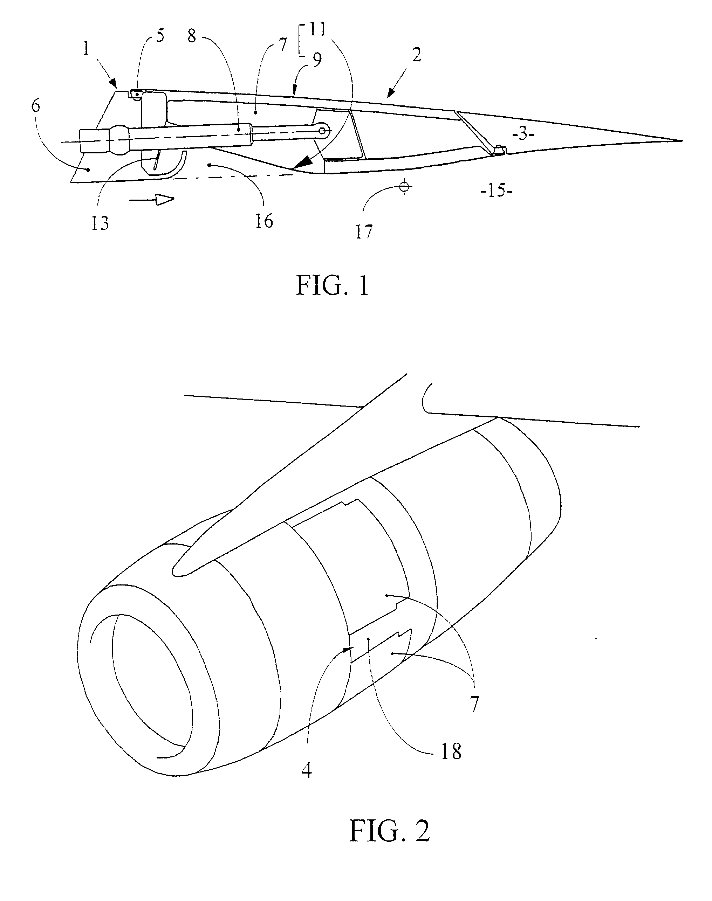

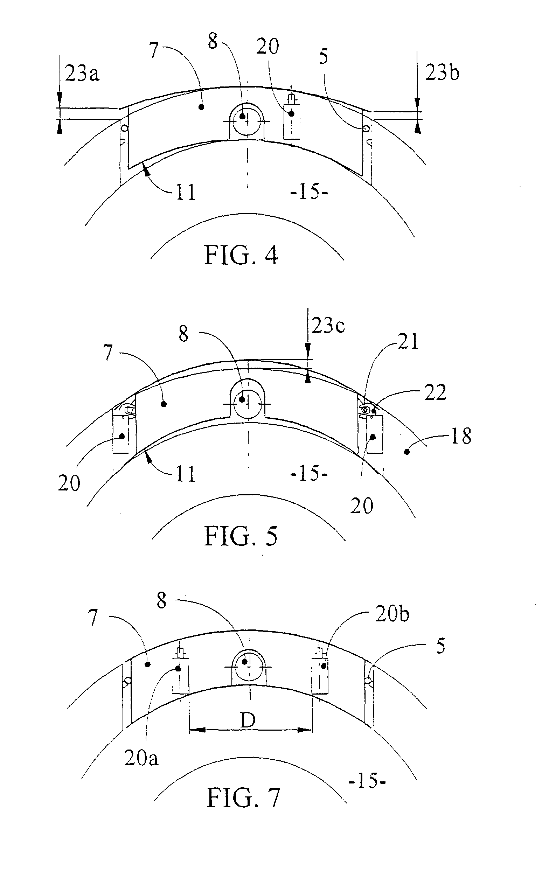

La figure 1 des dessins joints montre un exemple connu de réalisation d'un inverseur de poussée de ce type, appliqué comme le montre la vue schématique en perspective de la figure 2, à un turboréacteur à double flux.

Le dispositif d'inversion est constitué de portes 7 formant une partie mobile 2 et constituant en position inactive, lors d'un fonctionnement en jet direct, une partie du capotage extérieur, et d'une structure fixe réalisant ce capotage extérieur en amont des portes, par une partie amont 1 puis en aval des portes, par une partie aval 3 et entre les portes 7 par l'intermédiaire de poutres 18 qui relient la partie aval 3 du capotage extérieur à la partie amont 4 du capotage extérieur. Les portes 7 sont montées sur une circonférence du capotage extérieur et sont montées pivotantes dans une zone intermédiaire de leurs parois latérales sur les poutres 18 situées de part et d'autre de ces portes, ces parois latérales constituant avec les parois amont et aval, les parois qui relient la partie extérieure 9 des portes 7, qui constituent une partie de la paroi extérieure de la nacelle, à la partie intérieure 11 des portes 7, qui constituent une partie de la paroi extérieure du conduit.

La partie amont 1 de structure fixe comporte un cadre avant 6 qui sert de support aux moyens de commande des déplacements des portes 7, constitués par exemple par des vérins 8.

En position activée, les portes 7 basculent de telle façon que la partie des portes situées en aval des pivots 17, vient obstruer plus ou moins totalement le conduit, et de telle façon que la partie amont des portes vient dégager un passage dans le capotage extérieur de manière à permettre au flux secondaire d'être canalisé radialement par rapport à l'axe du conduit. La partie amont des portes 7 fait saillie à l'extérieur du capotage extérieur pour des raisons de dimensionnement du passage qui doit être capable de laisser passer ce flux sans compromettre le fonctionnement du moteur. L'angle de pivotement des portes est ajusté de manière à permettre le passage du flux et de manière à supprimer la poussée de ce flux, voire à commencer à générer une contre poussée en générant une composante du flux dévié vers l'amont.

Les portes 7 sont également munies dans leur partie amont d'un becquet 13 faisant saillie vers l'avant, lorsque les portes 7 sont déployées, par rapport à la face interne des portes, de manière à dévier le flux vers l'amont et achever d'obtenir la composante de contre poussée.

Des exemples connus de réalisation sont illustrés par exemple par FR 1 482 538 ou par FR-A-2 030 034.

Il existe aussi des dispositifs tels que celui décrit par US 3 605 411 qui permettent d'avoir une saillie de becquet vers l'amont lorsque les portes sont déployées tout en permettant une continuité de la paroi externe du conduit lorsque les portes ne sont pas déployées. On connaît également par FR-A-2 618 853 un dispositif où le becquet est escamoté en jet direct de façon à optimiser les performances du moteur.

Dans certaines applications, comme représenté sur la figure 1, les becquets 13 font saillie par rapport à la face interne 11 des portes 7, même en jet direct sans pour autant faire saillie dans le conduit qui est dans cet exemple muni de cavités 16 légèrement préjudiciables aux performances du moteur alors que le dispositif d'inversion devient extrêmement simple.

La combinaison des becquets et des bords de déviation permettent également d'optimiser la direction d'éjection du flux comme indiqué par FR-A-2 680 547.

Enfin la commande des portes d'une position à une autre par vérin est connue en soi, nous noterons cependant la solution très simple où il y a un vérin par porte fixé dans sa partie amont à la structure fixe amont du capotage extérieur, et dans sa partie aval à la porte en un point situé dans la partie amont comme décrit par exemple par FR 1 482 538.

La plupart des inverseurs à portes possèdent plusieurs systèmes de verrouillage maintenant les portes en position fermée dont un verrou, communément appelé verrou primaire. Ce verrou est généralement situé entre le cadre avant de l'inverseur et la structure amont des portes. Il est aussi placé soit au-dessus du vérin dans l'axe de la porte si la géométrie le permet, soit placé d'un côté ou de l'autre du vérin, se trouvant dès lors décalé par rapport à l'axe de la porte.

EP-A-0 357 494 montre en outre un verrouillage sur un cadre avant de structure fixe d'inverseur de poussée mais il ne concerne que les volets auxiliaires équipant les portes d'inverseur du côté interne.

Lorsque la structure de la porte est assujettie à un vérin central, celle-ci comporte un logement qui permet de contenir le corps du vérin dans l'épaisseur de la structure nacelle en position jet direct. Cela a pour conséquence de réduire la section de la partie amont de la porte et de réduire sa raideur structurale.

En jet direct, le flux circulant dans le canal annulaire 15 applique une pression aérodynamique sur la face interne de la porte 7. Du fait des deux points énoncés précédemment, la porte entaillée au milieu de sa structure et la retenue de la porte en un point central ou légèrement décalé, la structure générale de la porte subit des déformations plus ou moins prononcées selon le cas de vol. Il en résulte des désaffleurements de porte qui peuvent compromettre les performances aérodynamiques et l'étanchéité de la porte, notamment au niveau du joint d'étanchéité 5 sur le bord amont.

Un des buts de l'invention est d'éviter ces inconvénients des solutions connues antérieures et d'assurer, au contraire, un alignement des surfaces extérieures et intérieures de la porte dans les lignes de la nacelle pour garantir les performances aérodynamiques. L'invention vise en outre à améliorer la distribution des efforts de verrouillage de la porte dans la structure de l'inverseur. Ces résultats doivent être obtenus sans accroissement notable de la masse.

Ces buts sont atteints conformément à l'invention grâce à une disposition spécifique d'organes de verrouillage de porte et dans ce cas l'inverseur de poussée à portes pivotantes du type précité est caractérisé en ce que deux verrous primaires solidaires du cadre avant de structure fixe amont et disposés de part et d'autre d'une ligne centrale de la porte sont simultanément en contact avec la porte et. retiennent ladite porte en configuration de vol.

D'autres caractéristiques et avantages de l 'invention seront mieux compris à la lecture de la description qui va suivre d'un mode de réalisation de l'invention, en référence aux dessins annexés sur lesquels :
- la figure 1 représente une demi-vue schématique, en coupe longitudinale par un plan passant par l'axe de rotation d'un turboréacteur associé, d'un inverseur de poussée à portes pivotantes, en position fermée, d'un type connu et qui a fait précédemment l'objet d'une description,
- la figure 2 représente une vue schématique en perspective d'un inverseur de poussée du type précité montré en position montée avec les portes fermées,
- la figure 3 représente une disposition du verrouillage primaire de la porte en perspective du type précité en position jet direct,
- la figure 4 représente une vue schématique en face avant d'une porte définie dans la figure 3 qui subit une déformation due à la pression aérodynamique,
- la figure 5 représente une vue schématique en face avant d'une porte comportant des verrous latéraux et qui subit une déformation due à la pression aérodynamique,
- la figure 6 représente une disposition du verrouillage primaire de la porte en perspective selon le mode de l'invention,
- la figure 7 représente une vue schématique en face avant d'une porte définie dans la figure 6,
- la figure 8 représente une disposition du verrouillage primaire de la porte en perspective selon le mode de l'invention appliqué à une porte comportant un coin coupé.

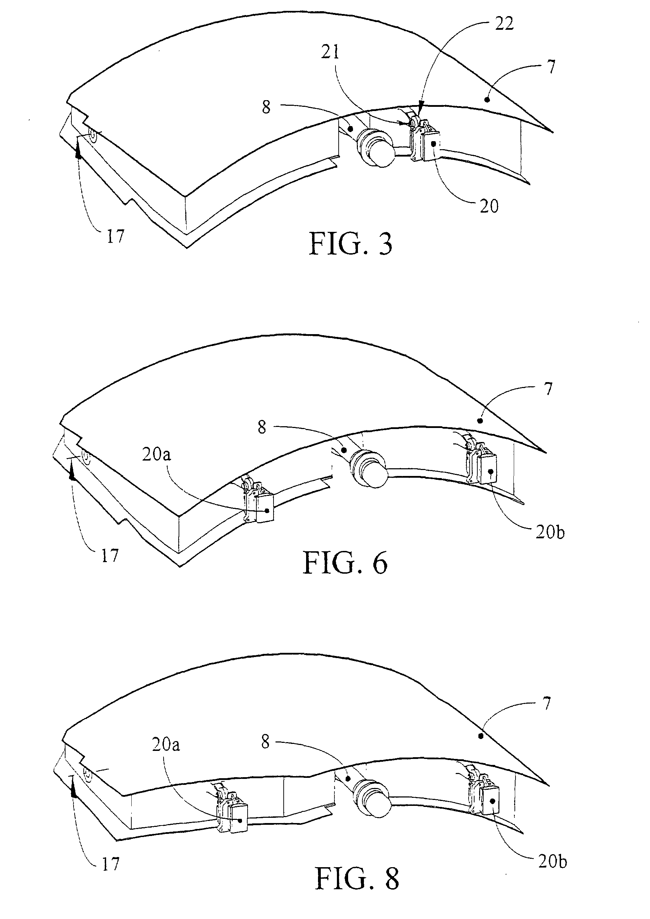

Les figures 3 et 4 représentent la disposition rencontrée généralement sur un inverseur à portes pour verrouiller la porte 7. Un verrou 20 solidaire de la structure du cadre 6 de la structure fixe 1 est positionné dans l'axe ou décalé de l'axe longitudinal de la porte 7 comme montré sur la figure 4. En mode jet direct, il retient la porte 7 par contact de l'olive 21 sur le crochet 22 du verrou 20.

La pression appliquée sur l'interne 11 de la porte 7 par le flux circulant dans le canal annulaire 15 provoque une déformation de la structure, dépendant du taux de compression du gaz dans le conduit.

La déformée la plus importante est localisée à l'amont de la porte à l'interface avec la structure fixe 1. Cette déformée comporte au moins un point d'alignement avec les lignes nacelle au niveau du verrouillage par le verrou 20 et un désafleurement progressif 23a et 23b de part et d'autre de ce point au fur et à mesure que l'on s'éloigne vers les bords latéraux de la porte 7.

La conséquence principale de cette déformation est une perte locale possible de l'étanchéité 5 de la porte 7 et une réduction de la qualité du lissage externe et interne des lignes de la nacelle.

Une solution pour réduire les déformées est de renforcer la structure de la porte 7 mais ceci aurait un impact sur la masse peut être plus négatif que les pertes aérodynamiques dues aux déformations rencontrées sur la porte 7.

On le voit actuellement, l'homme du métier doit trouver un compromis entre la rigidité structurale et la masse.

Pour répondre à ce problème et permettre d'obtenir une porte 7 sans désafleurement avec les lignes nacelle en jet direct, une solution proposée de l'invention est de réaliser le verrouillage par deux verrous 20a et 20b. Le but de l'invention est de fournir une disposition bien particulière à ces organes.

En effet selon la figure 5, une localisation en amont des verrous 20 placés en parties latérales de la porte 7 risque de ne pas répondre au problème de déformation de la structure, la porte 7 alors en appui sur les crochets 22 se déformerait par accentuation de sa concavité créant un désafleurement 23c avec les lignes nacelle dont l'ampleur maximum se situerait vers le centre de la porte.

La présente invention s'applique à tout type d'inverseur à portes comprenant au moins une porte 7. Elle propose une disposition de deux verrous 20a et 20b solidaires du cadre avant 6 et placés de part et d'autre du vérin central 8, ces deux verrous en configuration de vol sont simultanément en contact avec la porte qu'ils retiennent à eux deux. La figure 7 montre la disposition des organes de verrouillage 20a et 20b pour laquelle la distance "D" requise entre les éléments structuraux desdits verrous doit être au moins de la valeur projetée de la taille d'un tiers de disque moteur en regard du système de rétention de la porte de l'inverseur, qui correspond à la taille du plus gros débris moteur qui puisse être éjecté lors d'un éclatement moteur.

Selon les dispositions générales de l'ensemble de la nacelle, les verrous peuvent être plus ou moins centrés par rapport à l'axe central de la porte 7.

La figure 6 montre une application de cette disposition appliquée à une porte sans coin cassé pour laquelle les verrous peuvent être installés à des distances identiques par rapport à l'axe de la porte 7.

La figure 8 quant à elle montre une installation des verrous sur une porte comportant un coin cassé. La structure du coin cassé se rapprochant de l'axe pivot 17 de la porte 7, celle-ci est moins sensible à la pression aérodynamique appliquée sur la porte et de ce fait, tout en respectant la valeur "D", l'ensemble des verrous 20a et 20b peut être positionné non symétrique par rapport à l'axe longitudinal de la porte 7. Ceci est également vrai pour un chargement aérodynamique non symétrique sur une porte à structure aussi bien symétrique que non symétrique.

Il est à noter que pour ce cas de figure, le verrou 20a peut être installé dans une position autre que parallèle à l'axe longitudinal de la nacelle.

Cette disposition permet de mieux contenir les déformations créées par les chargements aérodynamiques sur toute la surface interne 11 de la porte 7 et de ce fait de minimiser voire d'annuler les désafleurements de la structure de la porte 7 par rapport à la structure fixe 1. De plus il n'y a plus de risque de perte d'étanchéité de la porte avec la structure fixe.

Les verrous étant situés à des emplacements proches des implantations structurales des poutres 18 et structures latérales supérieures et inférieures de la nacelle, avec le cadre 6, celui-ci peut avoir sa structure allégée.

Un autre paramètre de sécurité est lié à cette disposition. L'utilisation de deux verrous primaires, c'est à dire deux verrous 20a et 20b verrouillant la porte de façon identique, permet de palier la défaillance de l'un par l'autre dans le cas par exemple d'un non encliquetage d'un des verrous en refermeture de la porte 7. Le verrou secondaire n'est alors pas sollicité et/ou pour maintenir les portes sans débordement excessif de la structure fixe, il n'est alors pas nécessaire d'activer le vérin de façon permanente, évitant ainsi toute contrainte supplémentaire dans la structure fixe et les risques de panne vérin accrus.

## Revendications

1. Inverseur de poussée de turboréacteur à double flux comportant une partie amont (1) de structure fixe dont un cadre avant (6) supporte des moyens (8) de commande de déplacement, une partie aval (3) et une partie mobile (2) comprenant des portes pivotantes (7) en position fermée, lors d'un fonctionnement en jet direct, s'intégrant dans la paroi extérieure du conduit (15) de flux en arrière de la soufflante de turboréacteur, et en outre chacune pivotant sous l'action du moyen (8) de commande des déplacements de manière à constituer des obstacles de déviation de flux lors d'un fonctionnement en inversion de poussée **caractérisé en ce que** deux verrous primaires (20a, 20b) solidaires du cadre avant (6) de structure fixe amont et disposés de part et d'autre d'une ligne centrale de la porte (7) sont simultanément en contact avec la porte (7) et retiennent ladite porte (7) en configuration de vol sans désafleurement par rapport aux lignes externes et internes de nacelle.

2. Inverseur de poussée de turboréacteur à double flux selon la revendication 1 dans lequel les deux verrous (20a, 20b) sont distants l'un de l'autre d'une distance D au moins égale à la valeur d'un tiers du diamètre transversal de disque du turboréacteur associé.

3. Inverseur de poussée de turboréacteur à double flux selon l'une des revendications 1 ou 2 dans lequel les deux verrous (20a, 20b) sont installés à égale distance de l'axe longitudinal de la porte (7).

4. Inverseur de poussée de turboréacteur à double flux selon l'une des revendications 1 ou 2 dans lequel les deux verrous associés à une porte de structure non symétrique sont installés respectivement chacun à une distance différente par rapport à l'axe longitudinal de la porte.

5. Inverseur de poussée de turboréacteur à double flux selon l'une des revendications 1 ou 2 dans lequel les deux verrous associés à une porte soumise à un chargement aérodynamique non symétrique sont installés respectivement chacun à une distance différente par rapport à l'axe longitudinal de la porte.

6. Inverseur de poussée de turboréacteur à double flux selon l'une quelconque des revendications 1 à 5 dans lequel les deux verrous (20a, 20b) sont installés parallèles à l'axe longitudinal de la porte (7).

7. Inverseur de poussée de turboréacteur à double flux selon l'une quelconque des revendications 1 à 5 dans lequel les deux verrous sont installés perpendiculaires à la structure en vis à vis de la porte.

## Patentansprüche

1. Schubumkehrvorrichtung für ein Zweikreis-TL-Triebwerk mit einem vorderen Teil (1) festen Aufbaus, der einen Vorderrahmen (6) aufweist, auf dem Mittel (8) zur Bewegungssteuerung sitzen, sowie einem hinteren Teil (3) und einem bewegbaren Teil (2) mit Schwenkklappen (7), die sich in Schließstellung im Direktstrahlbetrieb in die Außenwand der Gasstromleitung (15) hinter dem Triebwerksgebläse einfügen und ferner jeweils unter der Einwirkung der Mittel (8) zur Bewegungssteuerung dergestalt schwenken, dass sie für den Umkehrschubbetrieb Umlenkhindernisse für den Strahl bilden,
**dadurch gekennzeichnet,**
**dass** zwei Primärriegel (20a, 20b), die mit dem Vorderrahmen (6) des vorderen festen Aufbaus fest verbunden sind und zu beiden Seiten einer Mittellinie der Klappe (7) angeordnet sind, gleichzeitig mit der Klappe (7) in Kontakt sind und diese Klappe (7) in Flugkonfiguration ohne Überstand über die Außen- und Innenlinien der Gondel festhalten.

2. Schubumkehrvorrichtung für ein Zweikreis-TL-Triebwerk nach Anspruch 1, wobei die beiden Riegel (20a, 20b) in einem Abstand D von einander beabstandet sind, der mindestens gleich dem Wert eines Drittels des Durchmessers der zugehörigen TL-Triebwerksscheibe ist.

3. Schubumkehrvorrichtung für ein Zweikreis-TL-Triebwerk nach einem der Ansprüche 1 oder 2, wobei die beiden Riegel (20a, 20b) in gleichem Abstand von der Längsachse der Klappe (7) angeordnet sind.

4. Schubumkehrvorrichtung für ein Zweikreis-TL-Triebwerk nach einem der Ansprüche 1 oder 2, wobei die beiden Riegel, die mit einer Klappe von unsymmetrischem Aufbau verbunden sind, jeweils in einem anderen Abstand von der Längsachse der Klappe angeordnet sind.

5. Schubumkehrvorrichtung für ein Zweikreis-TL-Triebwerk nach einem der Ansprüche 1 oder 2, wobei die beiden Riegel, die mit einer Klappe verbunden sind, die einer unsymmetrischem aerodynamischen Belastung ausgesetzt wird, jeweils in einem anderen Abstand von der Längsachse der Klappe angeordnet sind.

6. Schubumkehrvorrichtung für ein Zweikreis-TL-Triebwerk nach einem der Ansprüche 1 bis 5, wobei die beiden Riegel (20a, 20b) parallel zur Längsachse der Klappe (7) angeordnet sind.

7. Schubumkehrvorrichtung für ein Zweikreis-TL-Triebwerk nach einem der Ansprüche 1 bis 5, wobei die beiden Riegel gegenüber der Klappe im rechten Winkel an dem Aufbau angebracht sind.

## Claims

1. Bypass turbojet thrust reverser comprising an upstream part (1) of fixed structure a front frame (6) of which supports displacement control means (8), a downstream part (3) and a moving part (2) comprising pivoting doors (7) which, in a closed position, during operation in direct jet mode, are incorporated into the exterior wall of the flow duct (15) behind the turbojet fan, and each one also pivoting under the action of the displacement control means (8) so as to constitute obstacles diverting the stream during operation in reverse thrust mode, **characterized in that** two primary latches (20a, 20b) secured to the front frame (6) of upstream fixed structure and arranged on each side of a central line of the door (7) are simultaneously in contact with the door (7) and holds the said door (7) in the flight configuration without protruding from the interior and exterior lines of the nacelle.

2. Bypass turbojet thrust reverser according to Claim 1 in which the two latches (20a, 20b) are distant from one another by a distance D at least equal to the value of one third of the transverse diameter of the associated turbojet disc.

3. Bypass turbojet thrust reverser according to one of Claims 1 and 2 in which the two latches (20a, 20b) are installed at equal distances from the longitudinal axis of the door (7).

4. Bypass turbojet thrust reverser according to one of Claims 1 and 2 in which the two latches associated with a door of asymmetric structure are installed respectively each one a different distance away from the longitudinal axis of the door.

5. Bypass turbojet thrust reverser according to one of Claims 1 and 2 in which the two latches associated with a door subjected to an asymmetric aerodynamic loading are installed each one a different distance away from the longitudinal axis of the door.

6. Bypass turbojet thrust reverser according to any one of Claims 1 to 5 in which the two latches (20a, 20b) are installed parallel to the longitudinal axis of the door (7).

7. Bypass turbojet thrust reverser according to any one of Claims 1 to 5 in which the two latches are installed at right angles to the structure opposite the door.
